Europäisches Patentamt

European Patent Office

Office européen des brevets

(19)

(11) Publication number : **0 128 758 B2**

(12) ## NEW EUROPEAN PATENT SPECIFICATION

(45) Date of publication of the new patent specification : **07.10.92 Bulletin 92/41**

(51) Int. Cl.⁵ : **F16D 65/853,** F16D 65/12, F16D 55/14

(21) Application number : **84303885.2**

(22) Date of filing : **08.06.84**

(54) **Improvements in vehicle disc brakes of the liquid cooled type.**

(30) Priority : **11.06.83 GB 8316025**
**17.06.83 GB 8316548**
**01.11.83 GB 8329159**

(43) Date of publication of application :
**19.12.84 Bulletin 84/51**

(45) Publication of the grant of the patent :
**09.08.89 Bulletin 89/32**

(45) Mention of the opposition decision :
**07.10.92 Bulletin 92/41**

(84) Designated Contracting States :
**DE FR IT**

(56) References cited :
**DE-A- 2 331 315**
**DE-C- 440 674**
**FR-A- 1 318 579**
**GB-A- 739 244**

(56) References cited :
**GB-A- 916 856**
**US-A- 2 144 223**
**US-A- 2 927 673**
**US-A- 3 185 257**
**US-A- 3 198 295**
**US-A- 4 383 593**

(73) Proprietor : **LUCAS INDUSTRIES public limited company**
**Great King Street**
**Birmingham, B19 2XF West Midlands (GB)**

(72) Inventor : **Campbell, Roy**
**The Corner House 1 Marlbrook Lane**
**Licky Rock Bromsgrove Worcestershire (GB)**
Inventor : **Gornall, Graham John**
**17 Sadler Road**
**Sutton Coldfield West Midlands B75 6HX (GB)**

(74) Representative : **Spall, Christopher John et al**
**BARKER, BRETTELL & DUNCAN 138 Hagley Road**
**Edgbaston Birmingham B16 9PW (GB)**

EP 0 128 758 B2

## Description

This invention relates to improvements in vehicle disc brakes of the liquid-cooled type, of the kind in which at least one friction braking member carrying a lining of friction material is rotatable in a housing containing a cooling liquid for cooling the braking member, and actuating means is provided for urging the braking member into engagement with a relatively stationary braking surface to apply the brake.

Actuating means suitable for a brake of the kind set forth is described in our own patent EP 0 046 062.

When disc brakes of the kind set forth are used with certain types of vehicles, for example agricultural type vehicles, there is often a need to accommodate high levels of energy and power. In order to accommodate such high levels it is desirable to make the effective area of the lining material as large as possible. Increasing the effective area of the lining material will reduce the contact pressure, increase the lining volume, and reduce the power and energy per unit of rubbed area, thereby reducing the braking path temperatures and the wear rate of the lining material. However, such a substantial increase in the area of the lining material can cause a deterioration in the flow of liquid around and across the braking faces such that the temperature can peak at the centre of the braking path to a point where a breakdown in the wetted area can cause rapid wear and disintegration of the lining material.

An example of a known form of disc brake lining to improve cooling is that described in GB-A-739 244 of the S.K. Wellman Company. This patent shows a disc brake in which water is pumped into a series of many concentric annular grooves provided in the lining of the friction braking member. The water cools the brake by boiling, so taking up its latent heat from the brake. The steam so produced escapes to atmosphere. The concentric annular grooves are intersected by radial channels along which the cooling water is forced from the centre of the brake.

We are also aware of DE-A-2 331 315 which discloses a friction member having a circumferential groove which divides the friction material into inner and outer annular rings, together with angularly spaced radial grooves which traverse the circumferential groove and are provided fro the purpose of distributing cooling liquid over the surface of the friction member. Liquid is fed to the circumferential groove through axial bores in the friction member. The radial grooves do not lead as far as the outer and inner peripheries of the friction material in order to prevent cooling liquid from escaping too rapidly.

According to a first aspect of the invention we provide a friction braking member in accordance with claim 1.

According to a second aspect of the invention we provide a vehicle disc brake of the liquid-cooled type in accordance with claim 13.

The reservoir ensures adequate circulation of liquid across the braking faces of the rings during brake application, and the flow controlling means controls the flow of liquid across the braking faces.

Our arrangement maintains the lining friction level, and provides more equal work distribution across the braking face.

We can therefore increase the effective area of the lining material substantially in comparison with conventional friction braking members of similar type, whilst ensuring that the braking faces of the lining material are adequately cooled by liquid. This enables the brake to accommodate higher levels of energy and power and maintain substantially even wear of the lining material.

When the brake is of the multi-plate type comprising sets of relatively stationary and rotatable friction braking members alternatively interposed within a common housing, the stationary members comprise planar metal plates, and each rotatable member comprises a metal plate provided on opposite sides with a lining of friction material separated into two annular rings by a single groove which acts as a reservoir for cooling liquid, and flow controlling means for controlling the flow of liquid across the braking faces of the rings, the liquid reservoirs on opposite sides of each rotatable friction member will add to the cooling effects since each reservoir has a specific heat substantially five times greater than that of the intermediate stationary plates.

When the actuating means comprises an expander comprising a pair of pressure plates which are disposed between a pair of adjacent rotatable friction members, and balls located in angularly spaced recesses in adjacent faces of the pressure plates, relative angular movement between the pressure plates causes the balls to ride up ramps defined by the walls of the recesses thereby urging the pressure plates axially away from each other to clamp the braking members into frictional engagement, each said single annular groove in each rotatable friction member being substantially coincident with the pitch circle of the recesses in which the balls are located. This increases the degree of cooling in the regions of the the thinner metal section at the base of the recesses for the balls, thereby reducing the likelihood of hot spotting occuring in such regions.

The reservoir supply flow grooves in the inner annular ring may in addition to supplying cooling fluid to the annular groove also constitute a part of the flow controlling means . Such flow grooves may be radial. When flow grooves are provided in the outer ring they may be offset circumferentially from the grooves in the inner ring to promote a degree of circumferential flow around the annular groove by providing an increased throttling effect in a similar manner to that achieved when flow grooves are omitted from the out-

er ring. Alternatively the flow grooves in a quadrant of the braking member are parallel to each other, with the grooves in adjacent quadrants being mutually at right angles. In such a construction the grooves may extend through both rings of lining material, with at least some of those in adjacent quadrants intersecting in the inner ring to form a matrix.

The linings may be constructed from any conventional organic or inorganic material. For example the linings may be constructed by powder, moulding or felting techniques. Typically powder is applied to sintered material, moulding to resin and fibre, and felting to paper. Conventional sintered material has a relatively low coefficient of friction ($\mu$) and is relatively noisy in operation, whereas organic material has a relatively high $\mu$ and is quieter in operation as compared with sintered material. The wear characteristics of organic material may not be as good as those of sintered material for a given area, at least when subjected to relatively high brake energy and power and such materials, when dry, can fatigue and de-laminate.

The increase in the effective overall frictional braking area enables us to provide a multi-plate disc brake of increased energy and power capacity. Alternatively the brake can utilise fewer braking members which reduces the overall cost of the brake and compacts the assembly, at least axially.

The intermediate stationary plates are normally slotted to avoid coning so that the linings will engage frictionally with slotted faces. When the linings comprise paper or resin graphite any tendency for the paper or resin to fatigue as a result of being worked in and out of the slots in the stationary plates is reduced substantially by the relatively increased effective area of the lining. For example the internal radial dimension of the inner ring can be increased to match the internal radial dimension of the stationary plate, reducing the contact pressure or even eliminating the need for providing slots in the stationary plates.

Some embodiments of our invention are illustrated in the accompanying drawings in which:

Figure 1 is a plan of a self-energising brake of the oil-immersed multi-plate type;

Figure 2 is a section on the line 2-2 of Figure 1;

Figure 3 is a plan of a rotatable braking member for the brake illustrated in Figures 1 and 2;

Figure 4 is an end view of the same;

Figure 5 is a section through an actuator for the brake;

Figure 6 is a plan of another rotatable member;

Figure 7 is an end view of the member;

Figure 8 is a section on the line 8-8 of Figure 6.

Figure 9 is a section on the line 9-9 of Figure 6;

Figure 10 is a plan of yet another rotatable member.

Figure 11 is a plan of yet another rotatable member; and

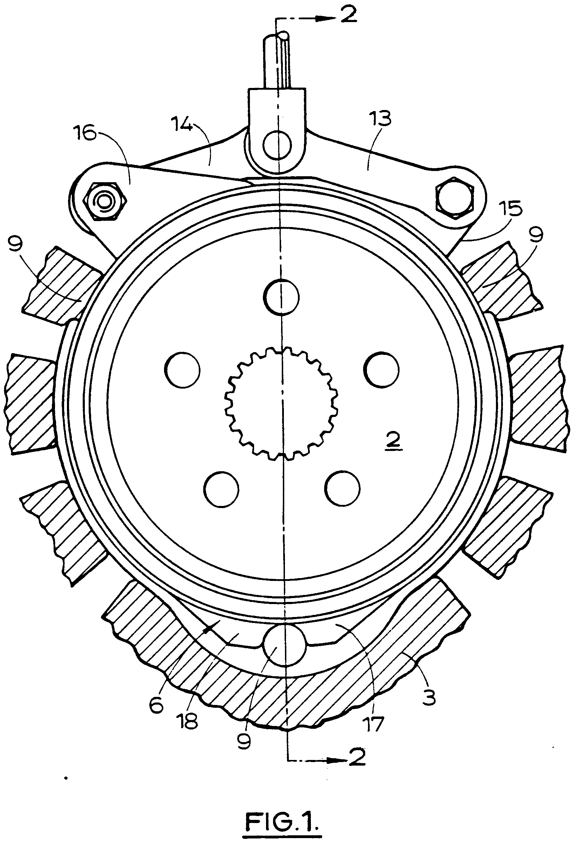

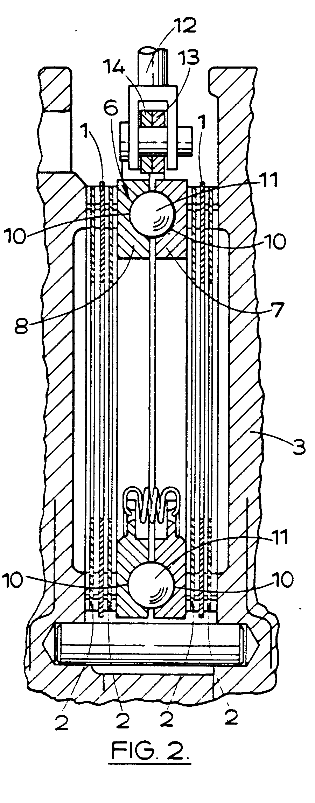

Figure 12 is a graph showing the relative cooling effects between a known friction member of an oiled-immersed brake of the multi-plate type and a friction member of the present invention. An oil-immersed brake of the multi-plate type illustrated in Figures 1 to 5 of the drawings comprises sets of relatively stationary and rotatable friction braking members 1 and 2 which are alternatively interposed within a common housing 3 through which cooling oil is circulated. All the braking members 1, 2 comprise annular discs of which the stationary members are keyed to the housing 3 at their outer peripheral edges for relative sliding movement, and the rotatable members 2 are slidably splined to a shaft to be braked. Each stationary member 1 comprises a planar steel plate which may be slotted to prevent coning, and each rotatable member 2 comprises a steel plate 4 provided on opposite sides with linings 5 of friction material. The peripheral edge of linings 5 may be displaced radially inwards slightly with respect to the peripheral edge of the plate 4.

An actuator assembly 6 is disposed between a pair of adjacent rotatable members 2, for example replacing a stationary plate. The actuator assembly 6 comprises a pair of pressure plates 7, 8 which are centred on pilots 9 in the housing and are provided in adjacent faces with angularly spaced recesses 10 in complementary pairs of which balls 11 are housed.

A pull-rod 12 is coupled to the inner ends of a pair of toggle links 13, 14 of which the outer ends are coupled to respective radial lugs 15, 16 on the two pressure plates 7 and 8.

The application of the brake is initiated by the pull-rod 12 which withdraws the toggle links 13, 14 to move the pressure plates 7, 8 angularly in the housing 3 in opposite directions. This causes the pressure plates 7 and 8 to separate axially by the balls 11 running up ramps defined by the walls of the recesses 10. This tends to clamp the two sets of friction members 1, 2 together, and the engagement of the pressure plates 7, 8 with the rotatable members 2 causes the two pressure plates 7, 8 to be carried round with the members 2 until the movement of one of them is arrested by a stop abutment in the housing 3, suitably defined by the engagement with a lug 17, 18 on that plate with a respective pilot 9. The other plate continues to be carried round with a servo or self-energising action which increases the separation of the pressure plates 7, 8 to enhance the braking force.

Each lining 5 comprises a ring of friction material, for example of conventional sintered material, but preferably of an organic material, suitably paper or resin graphite. The ring 5 is separated into the inner and outer annular rings 20, 21 by means of a circumferentially extending groove 22 which acts as a reservoir for oil to ensure that the interengaging braking faces of stationary and rotatable friction members are adequately wetted, and therefore adequately cooled, when the brake is applied.

As illustrated the groove 22 is formed in the lining 5 itself but, in a modification, the groove 22 may define a space between two separate concentric rings of friction material.

The groove 22 is substantially coincident with the pitch circle diameter of the recesses 10 in which the balls 11 are located. This increases the degree of cooling in the regions of the thinner metal sections of the pressure plates 7 and 8, thereby reducing the likelihood of hot or "blue" spotting occurring in such regions.

The linings 5 are provided with means for replenishing the reservoirs, in the form of reservoir supply flow grooves, and with -flow controlling means to control the flow of liquid across the braking faces.

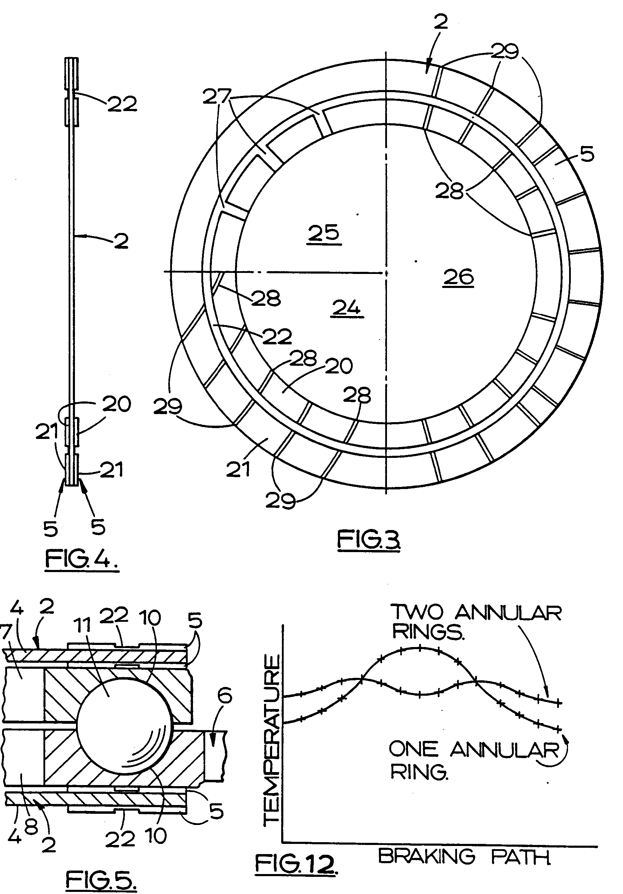

Various arrangements of such replenishment and flow controlling means are illustrated in Figure 3 of the drawings, with a different arrangement illustrated in each quadrant 23, 24, 25 and 26 of the friction member.

Depending upon the nature of the material comprising the friction lining and the effective area of the rings 20, 21, satisfactory flow control can be achieved by the natural porosity of the material itself.

As shown in quadrant 25 the inner ring 20 may be provided with angularly spaced straight radial flow grooves 27 to ensure adequate replenishment of the reservoir, with flow controlling means for the outer ring 21 being defined by the porosity of the lining material.

In the construction shown in quadrant 26 both rings are provided with radial flow grooves 28 and 29 respectively which are substantially radial. The grooves 28 and 29 may be aligned at adjacent ends, or, they may be relatively displaced circumferentially to provide a throttling effect. As illustrated, the grooves 28 and 29 may be straight but, in modifications, they may be eccentrically or spirally arranged.

As shown in quadrant 24 the grooves 28 and 29 are aligned at adjacent ends, but are curved slightly in the same direction to increase the rate of flow across the braking face.

In any of the constructions of quadrants 24, 25 and 26, the radial grooves may extend into the metal plate 4 itself. In another construction the grooves on opposite sides of the plate are superimposed upon each other, and may also be interconnected by complementary grooves extending through the metal plate 4 itself.

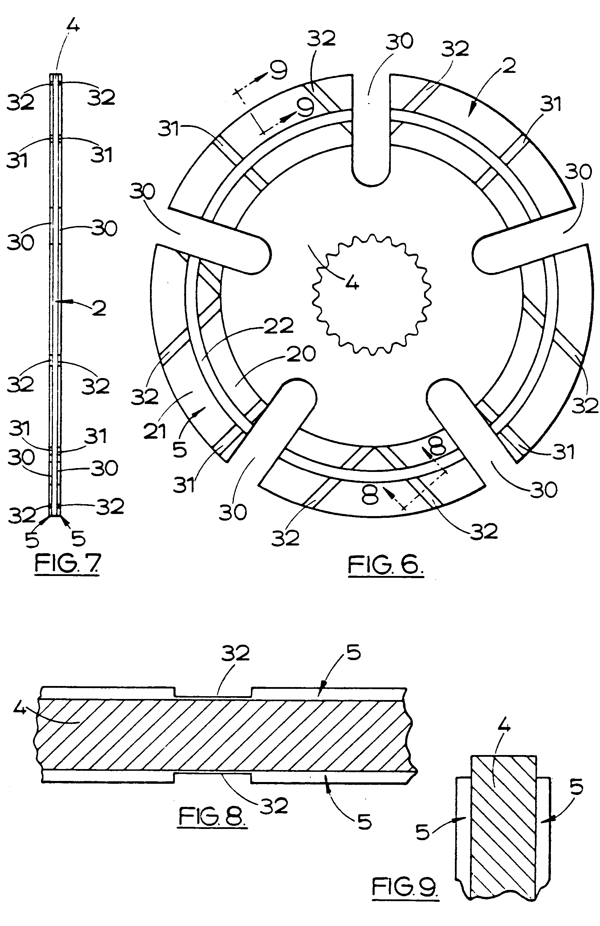

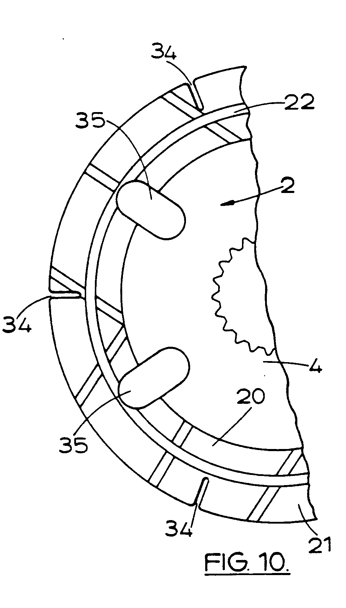

In the rotatable braking member shown in Figures 6 to 9, five radial notches 30, which are equi-spaced, angularly, extend inwardly from the peripheral edge of the member 2 through the plate 4 and both linings 5, to a position spaced inwardly from the inner peripheral edge of the ring 20.

The linings 5 are provided with flow groove patterns comprising four grooves 31 which are angularly spaced and extend generally radially, and with pairs of grooves 32, of which each pair is located, and spaced angularly, between adjacent pairs of the grooves 31. The grooves 32 of each pair diverge outwardly to the peripheral edges of the linings 5.

The pattern of the flow grooves 31 and 32 in one of the linings 5 is superimposed upon the pattern in the other although, in a modification, the two patterns may be displaced from each other.

All the flow grooves 31 and 32 traverse both rings 20 and 21 but are not as deep as the circumferentially extending groove 22 which acts as the reservoir.

The peripheral edges of the outer rings 21 are slightly inset radially from the peripheral edges of the metal plate 4.

The construction of the braking member of Figures 6 to 9 is otherwise the same as that of Figures 3 to 5 and corresponding reference numerals have been applied to corresponding parts.

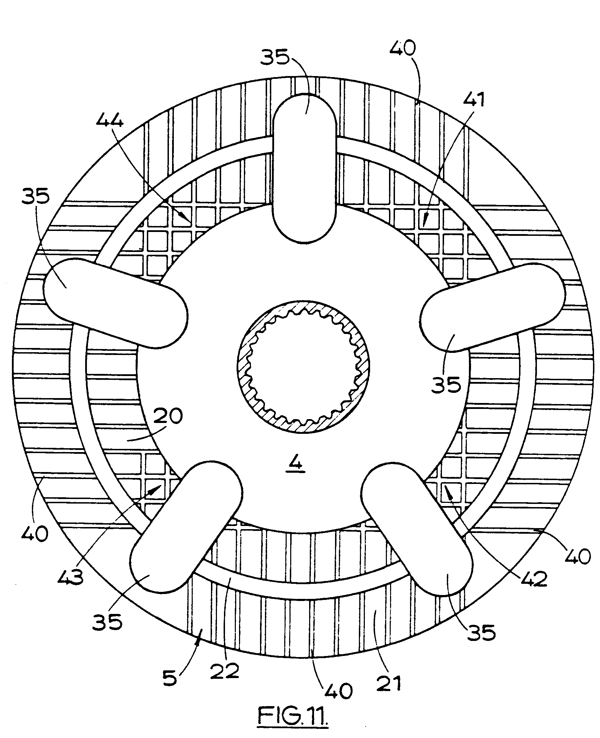

In the braking member of Figure 10 the notches 30 are replaced by five notches 34 of which the circumferential width is substantially less than that of the notches 30, and the notches 34, at their inner ends, only extend radially through the plate 4 and the rings 21 for distances terminating short of the groove 22.

The braking member 2 is provided with a further set of five grooves 35 which are alternately displaced between, and equi-angularly with respect to, the notches 34. The grooves 35 are in the form of angularly spaced, radially extending, openings, which pass through the material of both the linings 5 and the plate 4, traverse the ring 20, and terminate at their outer ends in the groove 22 and at their inner ends at a position displaced by a substantial distance from the inner peripheral edge of the ring 20. The openings 35 are substantially of similar circumferential width to that of the notches 30 in the braking member of Figures 6 to 9.

The linings 5 are provided with groove patterns similar to those of the braking member of Figures 6 to 9 with respect to which corresponding reference numerals have been applied to corresponding parts.

In the braking member of Figure 11 the notches 34 are omitted and the openings 35 are extended radially outwards to project radially into the rings 21 for substantially two thirds of the radial width of the rings 21.

The linings 5 are provided with a different pattern of flow grooves. As illustrated spaced parallel flow grooves 40 are provided in each quadrant of the braking member, and the grooves 40 in adjacent quadrants are mutually at right angles to each other. All the grooves 40 extend between the inner and outer peripheral edges of the linings 5, with the grooves 40 traversing the annular groove 22 and both rings 20 and 21. At least some of the grooves 40 in adjacent quadrants of at least the inner ring 20 intersect to form matrixes 41, 42, 43 and 44.

The grooves 40 are shallower than the groove 22.

In the construction of Figure 11 the radial extension of the openings 35 increases the flow of liquid across the braking faces and between opposite faces of the rotatable member 2, thereby increasing the cooling effect, and the arrangement of the grooves 40 provides a substantially even flow across the braking faces.

As in other constructions described above, the pattern of flow is superimposed in the linings 5 on opposite sides of the plate 4.

The construction of the braking member of Figure 11 is otherwise the same as that of Figure 10 and corresponding reference numerals have been applied to corresponding parts.

The graph of Figure 12 compares the braking face temperature for a given area of friction lining between a lining comprising a conventional single annular ring, and that of the present invention comprising two annular rings separated by a groove defining a reservoir for oil.

It will be observed that the braking face temperature of the conventional single ring rises significantly towards the centre of the face indicating inadequate liquid cooling. This will cause rapid wear of the lining material, for example fatigue and delamination in construction in which the lining is of paper. In the construction of the present invention incorporating two annular rings, it will be seen that a more even braking face temperature is achieved across the whole of the face indicating adequate and more even cooling.

## Claims

1. A friction braking member (2) having a metal plate (4) which carries a lining (5) of friction material and which is adapted to be rotatably mounted in use in a housing of a disc brake of the liquid cooled type in which actuating means (6) is provided for urging the braking member (2) into engagement with a relatively stationary braking surface to apply the brake, the lining (5) of friction material being separated into inner and outer annular rings (20, 21) by a single annular groove (22), characterised in that the single annular groove acts as a reservoir for cooling liquid and supplies cooling liquid to the outer annular ring, flow controlling means are provided for controlling the flow of liquid across the braking face of the outer ring, and reservoir supply flow grooves (27, 28) are provided in the inner ring (20) to replenish the cooling liquid of the annular groove with cooling liquid from a region at the inner peripheral edge of the inner ring, at least some of the reservoir supply flow grooves (27, 28, 30, 35) passing completely through the material of the metal plate (4) and the lining (5) and comprising radially elongate slots closed at their radially outer ends which slots extend from the inner peripheral edge of the inner ring (20) to at least the single annular groove (22) so as to retain cooling liquid in use and thereby act as radially extending feeds for the lining (5).

2. A friction braking member according to claim 1 in which the metal plate (4) has similar linings (5) of friction material on each side, and characterised in that the slots (35) communicate with the single annular groove (22) of each lining (5) and feed cooling liquid to both single annular grooves (22).

3. A friction braking member according to claim 1 or claim 2 in which the slots (35) terminate at said single annular groove (22).

4. A friction braking member according to any preceding claim in which said slots (35) are extended radially outwards to project radially into the ring (21) for substantially two thirds of the radial width of the ring (21).

5. A friction braking member according to any preceding claim in which said reservoir supply flow grooves (35) which pass completely through the metal plate (4) and lining (5) terminate at their radially inner ends at a region of the metal plate which does not carry lining (5) and is inward of the inner peripheral edge of the inner ring.

6. A friction braking member according to any preceding claim characterised in that in addition to said reservoir supply flow grooves (35) which pass completely through the metal plate (4) and lining (5), the lining material has additional reservoir supply flow grooves (40) which do not pass completely through the metal plate (4).

7. A friction braking member according to claim 6 in which there are two sets of additional reservoir supply flow grooves (40) extending at right angles to each other and crossing each other.

8. A friction braking member as claimed in any preceding claim in which the lining comprises a sintered material, a resin graphite or paper.

9. A friction braking member as claimed in any preceding claim, characterised in that at least some radially extending grooves (29) provided in the outer ring (21) are offset circumferentially with respect to the, or the additional, reservoir supply flow grooves in the inner ring so as to provide a degree of circumferential flow around the annular groove (22) by providing a throttling effect.

10. A vehicle disc brake of the liquid-cooled type, in which at least one friction braking member (2) carrying a lining (5) of friction material is rotatable in a housing (3) containing a cooling liquid for cooling the braking member, and actuating means (6) is provided for urging the braking member into engagement with a relatively stationary braking surface to apply the brake characterised in that the friction braking member (2) comprises a friction braking member according to any preceding claim.

11. A disc brake as claimed in claim 10, comprising sets of relatively stationary and rotatable friction braking members (1, 2) alternatively interposed within a common housing (3), characterised in that the stationary members (1) comprise planar metal plates, and each rotatable member (2) comprises a friction braking member according to any one of claims 1 to 12.

12. A disc brake as claimed in claim 10 or claim 11, characterised in that the actuating means (6) comprises an expander comprising a pair of pressure plates (7, 8) which are disposed between a pair of adjacent rotatable friction members (2), and balls (11) located in angularly spaced recesses (10) in adjacent faces of the pressure plates (7, 8), relative angular movement between the pressure plates (7, 8) causing the balls (11) to ride up ramps defined by the walls of the recesses (10) thereby urging the pressure plates axially away from each other to clamp the braking members into frictional engagement, and each singular annular groove (22) in each rotatable friction member is substantially coincident with the pitch circle of the recesses (10) in which the balls (11) are located.

**Patentansprüche**

1. Reibungsbremselement (2), welches eine Metallplatte mit einer Beschichtung (5) eines Reibmateriales aufweist, welches beim Gebrauch drehbar in einem Gehäuse einer Scheibenbremse der flüssigkeitsgekühlten Bauart gelagert ist, bei welcher eine Betätigungseinrichtung (6) vorgesehen ist, um das Bremselement (2) in Eingriff mit einer relativ stationären Bremsfläche zur Betätigung der Bremse vorzuspannen, wobei die Beschichtung (5) des Reibmateriales mittels einer einzigen Ringnut (22) in äußere und innere Kreisringe (20, 21) unterteilt ist, dadurch gekennzeichnet, daß die einzige Ringnut als Reservoir für Kühlflüssigkeit wirkt, und Kühlflüssigkeit zu dem äußeren Kreisring zuführt, daß Strömungssteuereinrichtungen zur Steuerung der Flüssigkeitsströmung über die Bremsfläche des äußeren Ringes vorgesehen sind und daß Reservoir-Versorgungs-Strömungsnuten (27, 28) in dem inneren Ring (20) vorgesehen sind, um die Kühlflüssigkeit der Ringnut mit Kühlflüssigkeit von einem Bereich an der inneren Umfangskante des inneren Ringes nachzufüllen, wobei zumindest einige der Reservoir-Versorgungs-Strömungsnuten (27, 28, 30, 35) sich vollständig durch das Material der Metallplatte (4) und der Beschichtung (5) erstrecken und längliche radial verlaufende, an ihrem radialäußerem Ende geschlossene Einkerbungen aufweisen, welche sich von der inneren Umfangskante des inneren Kreisringes (20) zumindest zu der einzigen Ringnut (22) erstrecken, so daß im Betrieb Kühlflüssigkeit zurückbehalten wird und dabei als radial verlängerte Zufuhr für die Beschichtung (5) wirkt.

2. Reibungsbremselement nach Anspruch 1, bei welchem die Metallplatte (4) auf beiden Seiten gleichartige Beschichtungen (5) eines Reibmateriales aufweist, dadurch gekennzeichnet, daß die Einkerbungen (35) mit der einzigen Ringnut (22) jeder Beschichtung (5) in Verbindung stehen und die Kühlflüssigkeit zu beiden einzigen Ringnuten (22) zuführen.

3. Reibungsbremselement nach Anspruch 1 oder 2, bei welchem die Einkerbungen (35) in der einzigen Ringnut (22) enden.

4. Reibungsbremselement nach wenigstens einem der vorhergehenden Ansprüche, bei welchem die Einkerbungen (35) sich radial nach außen erstrecken und den Kreisring (21) radial auf im wesentlichen zwei Drittel seiner radialen Breite überdecken.

5. Reibungsbremselement nach wenigstens einem der vorhergehenden Ansprüche, bei welchem die die Metallplatte (4) und die Beschichtung (5) vollständig durchsetzenden Reservoir-Versorgungs-Strömungsnuten (35) mit ihren radial inneren Enden in einen Bereich der Metallplatte ragen, welcher keine Beschichtung (5) aufweist und jenseits der inneren Umfangskante des inneren Ringes liegt.

6. Reibungsbremselement nach wenigstens einem der vorhergehenden Ansprüche, dadurch gekennzeichnet, daß zusätzlich zu den die Metallplatte (4) und die Beschichtung (5) vollständig durchsetzenden Reservoir-Versorgungs-Strömungsnuten (35) das Beschichtungsmaterial weitere Reservoir-Versorgungs-Strömungsnuten (40) aufweist, die die Metallplatte (4) nicht vollständig durchsetzen.

7. Reibungsbremselement nach Anspruch 6, bei welchem zwei Gruppen von Reservoir-Versorgungs-Strömungsnuten (40) vorgesehen sind, die zueinander im rechten Winkel und sich kreuzend angeordnet sind.

8. Reibungsbremselement nach wenigstens einem der vorhergehenden Ansprüche, bei welchem die Beschichtung ein gesintertes Material, ein Kunstharzgraphit oder Papier umfaßt.

9. Reibungsbremselement nach wenigstens einem der vorhergehenden Ansprüche, dadurch gekennzeichnet, daß wenigstens einige radial verlaufende Strömungsnuten (29) in dem äußeren Ring (21) ausgebildet sind und bezüglich der oder der zusätzlichen Reservoir-Versorgungs-Strömungsnuten in dem inneren Ring in Umfangsrichtung versetzt sind, um ein gewisses Maß von Umfangsströmung um die Ringnut (22) durch Schaffung eines Drosseleffektes zu erzeugen.

10. Fahrzeugscheibenbremse der flüssigkeitsgekühlten Bauart, bei welcher zumindest ein Reibungsbremselement (2), welches eine Beschichtung (5) aus einem Reibungsmaterial trägt, in einem Gehäuse (3) drehbar ist, welches eine Kühlflüssigkeit zur Kühlung des Bremselementes umfaßt, wobei eine Betätigungseinrichtung (6) zur Vorspannung des Bremselementes in Eingriff mit einer relativ stationären Bremsfläche zur Betätigung der Bremse vorgesehen ist, dadurch gekennzeichnet, daß das Reibungsbremselement (2) ein Reibungsbremselement nach einem der vorhergehenden Ansprüche ist.

11. Scheibenbremse nach Anspruch 10 mit Anordnungen von relativ stationären und drehbaren Reibungsbremselementen (1, 2), welche alternativ in einem gemeinsamen Gehäuse (3) zwischeneinander angeordnet sind, dadurch gekennzeichnet, daß die stationären Elemente (1) ebene Metallplatten umfassen und daß jedes drehbares Element (2) ein Reibungsbremselement nach einem der Ansprüche 1 bis 9 umfaßt.

12. Scheibenbremse nach Anspruch 10 oder 11, dadurch gekennzeichnet, daß die Betätigungseinrichtung (6) einen Expander umfaßt, welcher ein Paar von Druckplatten (7, 8) umfaßt, welche zwischen einem Paar von benachbarten drehbaren Reibungselementen (2) angeordnet sind, und Kugeln (11), welche in winkelmäßig beabstandeten Ausnehmungen (10) in benachbarten Flächen von Druckplatten (7,8) angeordnet sind, wobei eine winkelmäßige Relativbewegung zwischen den Druckplatten (7, 8) bewirkt, daß die Kugeln (11) entlang Schrägen, welche durch die Wandungen der Ausnehmungen (20) gebildet werden, abrollen, wodurch die Druckplatten axial voneinander weggedrückt werden, um die Bremselemente in Reibungseingriff zu klemmen, und daß jede Nut (22) in jedem drehbaren Reibungselement im wesentlichen koinzident mit dem Teilkreis der Ausnehmungen (10), in welchem die Kugeln (11) angeordnet sind, ist.

**Revendications**

1. Un élément de freinage par friction (2) comportant une plaque métallique (4) qui porte une garniture (5) en matériau de friction et qui est adaptée pour être montée de façon tournante, en service, dans un carter d'un frein à disques du type refroidi par liquide, dans lequel un moyen d'actionnement (6) est prévu pour pousser l'élément de freinage (2) au contact d'une surface de freinage relativement stationnaire pour serrer le frein, la garniture (5) en matériau de friction étant divisée en des anneaux intérieur et extérieur (20, 21) par une rainure annulaire unique (22), caractérisé en ce que la rainure annulaire unique agit comme un réservoir pour du liquide de refroidissement et alimente en liquide de refroidissement l'anneau extérieur, en ce que des moyens de commande d'écoulement sont prévus pour commander l'écoulement de liquide sur la face de freinage de l'anneau extérieur et en ce qu'il est prévu des rainures (27, 28) d'alimentation en liquide des réservoirs dans l'anneau intérieur (20) pour compléter le remplissage de la rainure annulaire avec du liquide de refroidissement à partir d'une zone du bord périphérique intérieur de l'anneau intérieur, au moins certaines des rainures (27, 28, 30, 35) passant complètement à travers la matière de la plaque métallique (4) et de la garniture (5) et comprenant des fentes allongées radialement et fermées à leurs extrémités radialement extérieures, lesdites fentes s'étendant depuis le bord périphérique intérieur de l'anneau intérieur (20) jusqu'à au moins la rainure annulaire unique (22), de façon à retenir du liquide de refroidissement en service et à agir ainsi comme des éléments d'alimentation pour la garniture (5).

2. Un élément de freinage par friction selon la revendication 1, dans lequel la plaque métallique (4) comporte de chaque côté des garnitures semblables (5) en matériau de friction, et caractérisé en ce que les fentes (35) communiquent avec la rainure annulaire unique (22) de chaque garniture (5) et alimentent en liquide de refroidissement les deux rainures annulaires uniques (22).

3. Un élément de freinage par friction selon la revendication 1 ou la revendication 2, dans lequel les fentes (35) se terminent à ladite rainure annulaire unique (22).

4. Un élément de freinage par friction selon une quelconque des revendications précédentes, dans lequel lesdites fentes (35) s'étendent radialement vers l'extérieur de façon à pénétrer radialement dans l'anneau (21) sur sensiblement les deux tiers de la largeur radiale de l'anneau (21).

5. Un élément de freinage par friction selon une quelconque des revendications précédentes, dans lequel les rainures (35) d'alimentation de réservoirs, qui passent complètement à travers la plaque métallique (4) et la garniture (5) se terminent à leurs extrémités radialement intérieures dans une zone de la plaque métallique qui ne porte pas la garniture (5) et qui est située à l'intérieur par rapport au bord périphérique intérieur de l'anneau intérieur.

6. Un élément de freinage par friction selon une quelconque des revendications précédentes, caractérisé en ce que, en addition auxdites rainures (35) d'alimentation de réservoirs qui passent complètement à travers la plaque métallique (4) et la garniture (5), la matière de garniture comporte des rainures additionnelles (40) d'alimentation de réservoirs qui ne passent pas complètement à travers la plaque métallique (4).

7. Un élément de freinage par friction selon la revendication 6, dans lequel il est prévu deux ensembles de rainures additionnellles (40) d'alimentation de réservoirs s'étendant perpendiculairement entre eux et se croisant mutuellement.

8. Un élément de freinage par friction tel que revendiqué dans une quelconque des revendications précédentes, dans lequel la garniture comprend un matériau fritté, une résine-graphite ou du papier.

9. Un élément de freinage par friction tel que revendiqué dans une quelconque des revendications précédentes, caractérisé en ce qu'au moins certaines rainures (29) s'étendant radialement et prévues dans l'anneau extérieur (21) sont décalées circonférentiellement par rapport aux rainures principales ou aux rainures additionnelles d'alimentation de réservoirs prévues dans l'anneau intérieur de façon à créer un certain degré d'écoulement circonférentiel autour de la rainure annulaire (22) en produisant un effet d'étranglement.

10. Un frein à disques pour véhicule du type refroidi par liquide, dans lequel au moins un élément de freinage par friction (2) portant une garniture (5) en matériau de friction peut tourner dans un carter (3) contenant un liquide de refroidissement pour refroidir l'élément de freinage, et un moyen d'actionnement (6) est prévu pour pousser l'élément de freinage au contact d'une surface de freinage relativement stationnaire pour serrer le frein, caractérisé en ce que l'élément de freinage par friction (2) comprend un élément de freinage par friction selon une quelconque des revendications précédentes.

11. Un frein à disques tel que revendiqué dans la revendication 10, comprenant des ensembles d'éléments de freinage par friction (1, 2) relativement stationnaires et tournants, alternativement imbriqués à l'intérieur d'un carter commun (3), caractérisé en ce que les éléments stationnaires (1) comprennent des plateaux métalliques plans et chaque élément tournant (2) comprend un élément de freinage par friction conforme à une quelconque des revendications 1 à 9.

12. Un frein à disques tel que revendiqué dans la revendication 10 ou la revendication 11, caractérisé en ce que le moyen d'actionnement (6) comprend un mécanisme d'expansion comportant deux plateaux de pression (7, 8) qui sont disposés entre deux éléments de friction (2) tournants adjacents, et des billes (11) logées dans des évidements (10) espacés angulairement dans des faces adjacentes des plateaux de pression (7, 8), un mouvement angulaire relatif entre les plateaux de pression (7, 8) faisant en sorte que les billes (11) montent sur des rampes définies par les parois des évidements (10) en écartant ainsi les plateaux de pression axialement l'un de l'autre pour bloquer les éléments de freinage par contact frottant, et chaque rainure (22) prévue dans chaque élément de friction tournant est sensiblement en coïncidence avec le cercle primitif des évidements (10) dans lesquels les billes (11) sont situées.

**FIG.1.**

FIG. 2.

FIG.4.

FIG.3

FIG.5.

FIG.12.

TWO ANNULAR RINGS.

ONE ANNULAR RING.

TEMPERATURE

BRAKING PATH

FIG. 7

FIG. 6.

FIG. 8.

FIG. 9.

FIG. 10.

FIG.11.